**Europäisches Patentamt**

**European Patent Office**

**Office européen des brevets**

(19)

(11) Veröffentlichungsnummer: **0 108 964**
**B1**

(12) # EUROPÄISCHE PATENTSCHRIFT

(45) Veröffentlichungstag der Patentschrift:
29.04.87

(51) Int. Cl.⁴: **C 08 F 10/00, C 08 F 4/68**

(21) Anmeldenummer: **83110599.4**

(22) Anmeldetag: **24.10.83**

(54) Verfahren zum Herstellen von Homo- und Copolymerisaten von Monoolefinen mittels eines Ziegler-Katalysatorsystems.

(30) Priorität: **13.11.82 DE 3242150**

(43) Veröffentlichungstag der Anmeldung:
**23.05.84 Patentblatt 84/21**

(45) Bekanntmachung des Hinweises auf die Patenterteilung:
**29.04.87 Patentblatt 87/18**

(84) Benannte Vertragsstaaten:
**AT BE DE FR GB IT**

(56) Entgegenhaltungen:
**DE-A-2 633 109**
**GB-A-1 601 418**
**US-A-4 154 701**

**Die Akte enthält technische Angaben, die nach
dem Eingang der Anmeldung eingereicht wurden
und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Warzelhan, Volker, Dr., Suedtiroler Ring 32, D-6719 Weisenheim (DE)**
Erfinder: **Ball, Wolfgang, Dr., 0 6,9, D-6800 Mannheim 1 (DE)**
Erfinder: **Bachl, Robert, Dr., Parsevalstrasse 2, D-6520 Worms 1 (DE)**

## Beschreibung

Die vorliegende Erfindung betrifft ein Verfahren zum Herstellen von Homo- und Copolymerisaten von $C_2$- bis $C_8$-α-Monoolefinen, insbesondere von Homo- und Copolymerisaten des Ethylens, durch Polymerisation des bzw. der Monomeren bei Temperaturen von 30 bis 200, insbesondere von 50 bis 125°C und Drücken von 0,1 bis 200, insbesondere von 5 bis 60 bar mittels eines Ziegler-Katalysatorsystems aus

(1) einer Übergangsmetall-Katalysatorkomponente und

(2) einer Organoaluminium-Katalysatorkomponente der Formel

$$AlR_mX_{3-m},$$

worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine Zahl von 1 bis 3, vorzugsweise eine Zahl von 2 bis 3,

mit den Maßgaben, (i) daß das Atomverhältnis Übergangsmetall aus der Katalysatorkomponente (1) : Aluminium aus Komponente (2) im Bereich von 1 : 0,1 bis 1 : 500, vorzugsweise 1 : 0,2 bis 1 : 200, liegt, sowie (ii) daß als Übergangsmetall-Katalysatorkomponente (1) eingesetzt wird das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1.000, vorzugsweise 1 bis 400 μm, ein Porenvolumen von 0,3 bis 3, vorzugsweise 1 bis 2,5 cm³/g sowie eine Oberfläche vor 100 bis 1.000, vorzugsweise 200 bis 400 m²/g besitzt und die Formel $SiO_2 . aAl_2O_3$ - worin a steht für eine Zahl im Bereich von 0 bis 2, insbesondere 0 bis 0,5 - hat, und

(1.1.2) eine Lösung (II), wie sie sich ergibt beim Zusammenbringen von

(IIa) 100 Gewichtsteilen eines Alkohols der Formel

Z-OH,

worin Z steht für einen gesättigten $C_1$- bis $C_8$-Kohlenwasserstoffrest, insbesondere einen gesättigten $C_1$- bis $C_6$-Kohlenwasserstoffrest, und vorzugsweise einen $C_1$- bis $C_4$-Alkylrest; und

(IIb) 0,01 bis 40, vorzugsweise 1 bis 25 Gewichtsteilen einer Übergangsmetall-Komposition

miteinander in Berührung bringt unter Bildung einer Suspension (III), mit der Maßgabe, daß das Gewichtsverhältnis anorganisch-oxidischer Stoff (I) : Übergangsmetall-Komposition (IIb) im Bereich von 1 : 0,01 bis 1 : 1,2, vorzugsweise von 1 : 0,2 bis 1 : 0,8 liegt, die Suspension (III) bei einer Temperatur, die unterhalb von 200, vorzugsweise unterhalb von 160°C und oberhalb des Schmelzpunkts des verwendeten Alkohols (IIa) liegt, bis zur trockenen Konsistenz - Bildung eines festphasigen Zwischenprodukts (IV) - eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel

$$AlR_mX_{3-m},$$

worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine Zahl von 1 bis 3, vorzugsweise eine Zahl von 2 bis 3,

miteinander in Berührung bringt unter Bildung einer Suspension, mit der Maßgabe, daß das Gewichtsverhältnis festphasiges Zwischenprodukt (IV) : Aluminiumverbindung (V) im Bereich von 1 : 0,05 bis 1 : 2, vorzugsweise 1 : 0,1 bis 1 : 1 liegt, - wobei das dabei als Suspendiertes resultierende, festphasige Produkt (VI) die Übergangsmetall-Katalysatorkomponente (1) ist - .

Polymerisationsverfahren dieser Art sind bekannt, wobei im gegebenen Zusammenhang als repräsentativ das in der GB-PS 1 601 418 beschriebene gelten kann.

Die genannte Verfahrensart hat - ebenso wie in Parallele zu setzende andere Verfahrensarten - zum Kernstück eine in besonderer Weise ausgestaltete Übergangsmetall-Katalysatorkomponente (1).

Die besonderen Ausgestaltungen der Übergangsmetall-Katalysatorkomponente werden bekanntlich vorgenommen, um bestimmte Ziele zu erreichen, wie die folgenden:

(a) Katalysatorsysteme, die eine erhöhte Ausbeute an Polymerisat zu liefern vermögen, nämlich Katalysatorsysteme mit einer erhöhten Produktivität, d.h. Systeme, bei denen die Menge an gebildetem Polymerisat pro Gewichtseinheit der Katalysatorkomponente (1) erhöht ist.

(b) Katalysatorsysteme, durch die weniger bzw. kein Halogen in das Polymerisat eingebracht wird; - was zu erreichen ist, indem

($b_1$) die Ausbeute gemäß (a) gesteigert wird und/oder

($b_2$) Übergangsmetall-Katalysatorkomponenten eingesetzt werden, die möglichst wenig bzw. kein Halogen enthalten.

(c) Katalysatorsysteme, die ihre positiven Wirkungen auch bei relativ niederen Temperaturen entfalten; - was z.B. für Trockenphasenpolymerisationen von Bedeutung sein kann.

(d) Katalysatorsysteme, durch welche die morphologischen Eigenschaften der Polymerisate in bestimmter Weise beeinflußt werden, etwa im Sinne einer einheitlichen Korngröße und/oder einer Verminderung des Feinstkornanteils und/oder eines hohen Schüttgewichtes; - was für die technische Beherrschung der Polymerisationssysteme, die Aufarbeitung der Polymerisate und/oder die Verarbeitbarkeit der Polymerisate von Bedeutung sein kann.

(e) Katalysatorsysteme, die einfach und sicher herzustellen und gut handzuhaben sind; - z.B. solche, die sich in (inerten) Kohlenwasserstoff-Hilfsmedien zubereiten lassen.

(f) Katalysatorsysteme, die es ermöglichen, bei Polymerisationen unter Einwirkung von Molekulargewichtsreglern, wie Wasserstoff, mit relativ geringen Mengen an Regler auszukommen; - was z.B. für die Thermodynamik der Verfahrensführung von Bedeutung sein kann.

(g) Katalysatorsysteme, die es erlauben, Polymerisate mit besonders ausgeprägter Spannungsrißbeständigkeit zu erzeugen; - einer Eigenschaft, die z.B. besonders wichtig ist für Flüssigkeits-Behältnisse, namentlich Behältnisse, in denen aggresive Flüssigkeiten aufbewahrt werden sollen.

(h) Katalysatorsysteme, die auf spezielle Polymerisationsverfahren zugeschnitten sind; - etwa solche, die z.B. entweder auf die spezifischen Besonderheiten der Suspensionspolymerisation oder auf die spezifischen Besonderheiten der Trockenphasenpolymerisation abgestimmt sind.

(i) Katalysatorsysteme, mittels derer Polymerisate mit einerseits einer hohen Molmasse (Fertigteilfestigkeit) sowie andererseits einer problemlosen Verarbeitbarkeit erhalten werden können; - d.h. hochmolekulare Polymerisate, die sich auch bei relativ niederen Verarbeitungstemperaturen und/oder durch relativ schwache Verarbeitungskräfte relativ schnell zu einwandfreien Formteilen verarbeiten lassen.

(j) Katalysatorsysteme, die zu Polymerisaten mit einer besonders hohen Steifigkeit führen; - einer Eigenschaft, die für viele Anwendungsgebiete erwünscht ist.

Nach den bisherigen Erfahrungen gibt es unter den mannigfachen Zielen etliche Ziele, die man durch besondere Ausgestaltungen der Übergangsmetall-Katalysatorkomponente nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen liegt auch die Aufgabenstellung, die zur vorliegenden Erfindung geführt hat: Eine neue Art Übergangsmetall-Katalysatorkomponente aufzuzeigen, mit der man gegenüber bekannten Übergangsmetall-Katalysatorkomponenten - unter vergleichbarer Zielsetzung - bessere Ergebnisse erreichen kann, insbesondere, was das vorgenannte Ziel (g) betrifft, das möglichst gut erreicht werden soll bei zugleich gutem Erreichen der Ziele (i) und (j) und möglichst geringem Zurücksetzen des Ziels (a).

Es wurde gefunden, daß die gestellte Aufgabe gelöst werden kann mit einer Übergangsmetall-Katalysatorkomponente (I) der eingangs geschilderten Art, in der die drei Übergangsmetalle Vanadium, Titan sowie Zirkon in bestimmter Weise gemeinsam enthalten sind.

Es ist zwar schon aus der US-A-4 154 701 bekannt, Übergangsmetall-Katalysatorkomponenten einzusetzen, in denen die drei Übergangsmetalle Vanadium, Titan sowie Zirkon in bestimmter qualitativer - nämlich ohne Trägerstoff - sowie bestimmter quantitativer Weise - nämlich mit dem Schwerpunkt auf Titan - gemeinsam enthalten sind; doch lassen sich so die oben vorgegebenen Ziele (g), (i), (j) und (a) in ihrer Gesamtheit nicht erreichen, denn insbesondere wird Ziel (a) je weiter verfehlt, je näher man den anderen Zielen kommt.

Um die genannten Ziele in ihrer Gesamtheit zu erreichen, ist es - erfindungsgemäß - demgegenüber unerläßlich, mit einer Übergangsmetall-Katalysatorkomponente zu arbeiten, die die drei Übergangsmetalle in anderer Weise enthält: nämlich auf einem bestimmten anorganischen Trägerstoff und mit dem Schwerpunkt auf Vanadium.

Gegenstand der vorliegenden Erfindung ist dementsprechend ein Verfahren zum Hestellan von Homo- und Copolymerisaten von $C_2$- bis $C_8$-α-Monoolefinen, insbesondere von Homo- und Copolymerisaten des Ethylens, durch Polymerisation des bzw. der Monomeren bei Temperaturen von 30 bis 200, insbesondere von 50 bis 125°C und Drücken von 0,1 bis 200, insbesondere von 5 bis 60 bar mittels eines Ziegler-Katalysatorsystems aus

(I) einer Übergangsmetall-Katalysatorkomponente und

(2) einer Organoaluminium-Katalysatorkomponente der Formel

$$AlR_mX_{3-m},$$

worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine Zahl von 1 bis 3, vorzugsweise eine Zahl von 2 bis 3,

mit den Maßgaben, (i) daß das Atomverhältnis Übergangsmetall aus der Katalysatorkomponente (1) : Aluminium aus der Katalysatorkomponente (2) im Bereich von 1 : 0,1 bis 1 : 500, vorzugsweise 1 : 0,2 bis 1 : 200, liegt, sowie (ii) daß als Übergangsmetall-Katalysatorkomponente (I) eingesetzt wird das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1.000, vorzugsweise 1 bis 400 μm, ein Porenvolumen von 0,3 bis 3, vorzugsweise 1 bis 2,5 $cm^3$/g sowie eine Oberfläche von 100 bis 1.000, vorzugsweise 200

bis 400 m$^2$/g besitzt und die Formel SiO$_2$.aAl$_2$O$_3$ - worin a steht für eine Zahl im Bereich von 0 bis 2, insbesondere 0 bis 0,5 - hat, und

(1.1.2) eine Lösung (II), wie sie sich ergibt beim Zusammenbringen von

(IIa) 100 Gewichtsteilen eines Alkohols der Formel

Z-OH,

worin Z steht für einen gesättigten C$_1$- bis C$_8$-Kohlenwasserstoffrest, insbesondere einen gesättigten C$_1$- bis C$_6$-Kohlenwasserstoffrest, und vorzugsweise einen C$_1$- bis C$_4$-Alkylrest, und

(IIb) 0,01 bis 40, vorzugsweise 1 bis 25 Gewichtsteilen einer Übergangsmetall-Komposition miteinander in Berührung bringt unter Bildung einer Suspension (III), mit der Maßgabe, daß das Gewichtsverhältnis anorganisch-oxidischer Stoff (I) : Übergangsmetall-Komposition (IIb) im Bereich von 1 : 0,01 bis 1 : 1,2, vorzugsweise von 1 : 0,2 bis 1 : 0,8 liegt, die Suspension (III) bei einer Temperatur, die unterhalb von 200, vorzugsweise unterhalb von 160°C und oberhalb des Schmelzpunkts des verwendeten Alkohols (IIa) liegt, bis zur trockenen Konsistenz - Bildung eines festphasigen Zwischenprodukts (IV) eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel

AlR$_m$X$_{3-m}$,

worin stehen

X für einen Rest OR, Chlor, Brom bzw. Wasserstoff, vorzugsweise einen Rest OR bzw. Chlor,

R für einen C$_1$- bis C$_{18}$-Kohlenwasserstoffrest, insbesondere einen C$_1$- bis C$_{12}$-Alkylrest, und vorzugsweise einen C$_2$- bis C$_8$-Alkylrest, und

m für eine Zahl von 1 bis 3, vorzugsweise eine Zahl von 2 bis 3,

miteinander in Berührung bringt unter Bildung einer Suspension, mit der Maßgabe, daß das Gewichtsverhältnis festphasiges Zwischenprodukt (IV) : Aluminiumverbindung (V) im Bereich von 1 : 0,05 bis 1 : 2, vorzugsweise 1 : 0,1 bis 1 : 1 liegt, - wobei das dabei als Suspendiertes resultierende festphasige Produkt (VI) die Übergangsmetall-Katalysatorkomponente (1) ist -.

Das erfindungsgemäße Verfahren ist dadurch gekennzeichnet, daß als Übergangsmetall-Katalysatorkomponente (1) eingesetzt wird ein festphasiges Produkt (VI), das erhalten worden ist unter Verwendung einer Übergangsmetall-Komposition (IIb) aus

(IIb1) 100 Molteilen eines Vanadiumtrihalogenids, wobei das Halogen Chlor und/oder Brom sein kann, vorzugsweise eines Vanadiumtrichlorids,

(IIb2) 1 bis 100 Molteilen eines Titantrihalogenids, wobei das Halogen Chlor und/oder Brom sein kann, vorzugsweise eines Titantrichlorids, sowie

(IIb3) 20 bis 200 Molteilen eines Zirkontetrahalogenids, wobei das Halogen Chlor und/oder Brom sein kann, vorzugsweise eines Zirkontetrachlorids.

Zu dem erfindungsgemäßen Verfahren ist im einzelnen das Folgende zu bemerken:.

Das Polymerisationsverfahren als solches kann - unter Beachtung der kennzeichnenden Besonderheiten - in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren, Lösungs-Polymerisationsverfahren oder Trockenphasen-Polymerisationsverfahren. Die erwähnten technologischen Ausgestaltungen - mit anderen Worten: die technologischen Varianten der Polymerisation von Olefinen nach Ziegler - sind aus der Literatur und Praxis wohlbekannt, so daß sich nähere Ausführungen zu ihnen erübrigen. Zu bemerken ist allenfalls noch, daß die neue Übergangsmetall-Katalysatorkomponente (I) - wie entsprechende bekannte Katalysatorkomponenten - z.B. außerhalb oder innerhalb des Polymerisationsgefäßes mit der Katalysatorkomponente (2) zusammengebracht werden kann; im letztgenannten Fall etwa durch räumlich getrennten Eintrag der Komponenten, die im übrigen in Form einer Suspension (Kalysatorkomponente (1)) bzw. Lösung (Katalysatorkomponente 2)) gehandhabt werden können. Auch ist es z.B. möglich, die Katalysatorkomponente (1) oder die vereinigten Katalysatorkomponenten (1) und (2) in Form von Partikeln einzusetzen, die mit einer Umhüllung aus Wachs versehen sind; - eine Arbeitsweise, die beim Trockenphasen-Polymerisationsverfahren von Vorteil sein kann.

Zu der neuen Übergangsmetall-Katalysatorkomponente (1) selbst ist das Folgende zu sagen:

Ihre Herstellung erfolgt in zwei Stufen, die oben sowie nachstehend mit (1.1) und (1.2) bezeichnet sind.

In Stufe (1.1) bringt man einen feinteiligen anorganisch-oxidischen Stoff (I) der oben definierten Art und eine bestimmte, oben definierte Lösung (II) miteinander in Berührung, wober sich eine Suspension (III) bildet, die bis zur trockenen Konsistenz - Bildung eines festphasigen Zwischenprodukts (IV) - eingedampft wird. In Stufe (1.2) wird letzteres mit einer Lösung einer bestimmten, oben definierten Aluminiumverbindung (V) in Berührung gebracht unter neuerlicher Bildung einer Suspension; wobei das dabei als Suspendiertes resultierende festphasige Produkt (VI) die neue Katalysatorkomponente (1) ist.

Im einzelnen kann man dabei wie folgt verfahren:

Stufe (1.1)

Der anorganisch-oxidische Stoff (I) wird in Substanz oder in einem Alkohol suspendiert (zweckmäßigerweise einem Alkohol wie er unter (IIa) definiert ist und mit einem Feststoffgehalt der Suspension von nicht weniger als 5 Gewichtsprozent) mit der Lösung (II) vereinigt und danach die gebildete Suspension (III) eingedampft.

Das Herstellen der Lösung (II) selbst kann so erfolgen, wie man üblicherweise Lösungen herstellt und ist insoweit nicht mit Besonderheiten verbunden.

Als abschließende Maßnahme bei Stufe (1.1) wird die Suspension (III) bis zur trockenen Konsistenz eingedampft, wobei das festphasige Zwischenprodukt (IV) erhalten wird. Hierbei kann man - unter Einhaltung der oben gegebenen Temperaturbedingungen - so verfahren, wie man üblicherweise Suspensionen schonend eindampft. Dies bedeutet, daß es im allgemeinen zweckmäßig - und bei relativ hohen Alkoholen (IIa) u.U. unerläßlich - ist, das Eindampfen unter mehr oder minder stark erniedrigtem Druck vorzunehmen. Als Faustregel gilt, daß man das Paar Temperatur/Druck so wählen sollte, daß der Eindampfvorgang nach etwa 1 bis 10 Stunden beendet ist. Zweckmäßig ist es auch, das Eindampfen unter steter Wahrung der Homogenität des behandelten Gutes vorzunehmen; - wofür sich z.B. Rotationsverdampfer bewährt haben. Eine verbleibende Restmenge an Alkohol, etwa eine durch Komplexbildung gebundene Menge, ist für das festphasige Zwischenprodukt (IV) im allgemeinen ohne Schaden.

Stufe (1.2)

Man bereitet zunächst in getrennten Ansätzen eine 0,1- bis 40-, vorzugsweise etwa 20-gewichtsprozentige Suspension des festphasigen Zwischenprodukts (IV) sowie eine 5- bis 80-, Vorzugsweise etwa 20-gewichtsprozentige Lösung der Aluminiumverbindung (V), wobei als Suspensions- bzw. Lösungsmittel insbesondere Kohlenwasserstoffe, vor allem relativ leichtsiedende Alkan-Kohlenwasserstoffe, wie Hexane, Heptane oder Benzine, in Betracht kommen. Danach vereinigt man die Suspension und die Lösung in solchen Mengenverhältnissen, daß das gewünschte Gewichtsverhältnis erreicht wird. Zur Vereinigung wird man im allgemeinen die Lösung in die Suspension unter Rühren einbringen, denn diese Verfahrensweise ist praktischer als die - ebenfalls mögliche - umgekehrte. Bei Temperaturen von -25 bis 120° C, insbesondere bei Temperaturen von 25 bis 80° C, ist innerhalb einer Zeitspanne von 15 bis 600 Minuten, insbesondere 60 bis 300 Minuten, die Bildung des - als Suspendiertes vorliegenden - festphasigen Produktes (VI) erfolgt. Dieses kann zweckmäßigerweise unmittelbar in Form der erhaltenen Suspension - gegebenenfalls nach einer Wäsche durch Digerieren - als Übergangsmetall-Katalysatorkomponente (I) verwendet werden. Falls gewünscht, ist es aber auch möglich, das festphasige Produkt (VI) zu isolieren und dann erst als Katalysatorkomponente (1) einzusetzen; - wobei sich zum Isolieren z.B. der folgende Weg anbietet: Man trennt das Produkt (VI) von der flüssigen Phase mittels Filtration und wäscht es mit reiner Flüssigkeit (etwa der Art, die man auch als Suspensions- bzw. Lösungsmittel verwendet hatte), worauf man es trocknet, etwa im Vakuum.

Die neuen Übergangsmetall-Katalysatoren (1), d.h. die festphasigen Produkte (VI), lassen sich im Rahmen des eingangs definierten Verfahrens zum Herstellen der dort genannten Polymerisate so einsetzen, wie man üblicherweise die Übergangsmetall-Katalysatorkomponenten bei der Polymerisation von α-Monoolefinen nach Ziegler einsetzt. Insoweit sind also beim erfindungsgemäßen Verfahren keine Besonderheiten gegeben, und es kann auf die aus Literatur und Praxis wohlbekannten Einsetzweisen verwiesen werden. - Es ist lediglich noch zu sagen, daß das Verfahren sich vornehmlich zum Herstellen von Homo- und Copolymerisaten des Ethylens eignet und daß im Falle des Herstellens von Copolymerisaten des Ethylens mit höheren α-Monoolefinen (oder auch des Herstellens von Homo- und Coplymerisaten von höheren α-Monoolefinen) vor allem Buten-1 und Hexan-1 als α-Monoolefine in Betracht kommen. Die Regelung der Molekulargewichte' der Polymerisate kann in einschlägig üblicher Weise erfolgen, insbesondere mittels Wasserstoff als Regulans.

Was die stoffliche Seite der neuen Übergangsmetall-Katalysatoren (1) betrifft, ist im einzelnen noch das Folgende zu sagen:

Der in Stufe (1.1) einzusetzende anorganisch-oxidische Stoff (I) wird im allgemeinen ein Aluminosilikat oder - insbesondere - ein Siliciumdioxid sein; wichtig ist, daß er die geforderten Eigenschaften besitzt. - Wie sich gezeigt hat, sind besonders gut geeignete Stoffe (I) solche, die gemäß der ersten Stufe (I) des in der GB-PS 1 550 951 beschriebenen Verfahrens erhalten werden, insbesondere dann, wenn dabei von Hydrogelen ausgegangen wird, wie sie nach den Vor-Stufen (A) bis (D) gemäß der gleichen PS anfallen; - d.h. von Hydrogelen, die nach dem in der GB-PS 1 368 711 beschriebenen Verfahren erhältlich sind.

Die einzusetzenden Alkohole (IIa) können z.B. sein: Methanol, Ethanol, Propanole sowie Butanole. Als besonders gut geeignet haben sich erwiesen z.B. Methanol, Ethanol, Isopropanol sowie n-Butanol. Die Alkohole (IIa) können eingesetzt werden in Form von Einzelindividuen sowie Gemischen aus zwei oder mehr Einzelindividuen.

Das einzusetzende Vanadiumtrihalogenid (IIb1) kann ein bei Ziegler-Katalysatorsystemen übliches sein.

Auch das einzusetzende Titantrihalogenid (IIb2) kann ein bei Ziegler-Katalysatorsystemen übliches sein, z.B. ein bei der Reduktion eines Titantetrahalogenids mittels Wasserstoff, Aluminium oder aluminiumorganischen Verbindungen erhaltenes Reaktionsprodukt. Als besonders gut geeignet haben sich erwiesen z.B. Trichloride der Formel $TiCl_3$, wie sie bei der Reduktion von Titantetrachlorid mittels Wasserstoff anfallen sowie Trichloride der Formel $TiCl_3 \cdot 1/3\ AlCl_3$, wie sie bei der Reduktion von Titantetrachlorid mittels metallischem Aluminium anfallen. Die Titantrihalogenide können eingesetzt werden in Form von Einzelindividuen sowie Gemischen aus zwei oder mehr Einzelindividuen.

Das einzusetzende Zirkontetrahalogenid (IIb3) kann ebenfalls ein bei Ziegler-Katalysatorsystemen übliches sein.

Die in Stufe (1.2) einzusetzende Aluminiumverbindung (V) kann z.B. eine Verbindung sein wie sie repräsentiert wird durch die Formeln $Al(C_2H_5)_3$, $Al(C_2H_5)_2Cl$, $Al(C_2H_5)_2Br$, $Al(C_2H_5)_{1,5}Cl_{1,5}$, $Al(C_2H_5)_{1,5}Br_{1,5}$, $Al(C_2H_5)Cl_2$, $Al(C_2H_5)Br_2$, $Al(C_4H_9)_3$, $Al(C_4H_9)_2Cl$, $Al(C_4H_9)Cl_2$, $Al(C_2H_5)_2H$, $Al(C_4H_9)_2H$, $Al(C_3H_7)_2(OC_3H_7)$ oder $Al(C_2H_5)_{1,5}(OC_2H_5)_{1,5}$ sowie Isoprenylaluminium. Wie sich gezeigt hat, sind besonders gut geeignet Aluminiumverbindungen der Formeln $C_2H_5AlCl_2$, $(C_2H_5)_2AlCl$ sowie Isoprenylaluminium.

Die Aluminiumverbindungen (V) können eingesetzt werden in Form von Einzelindividuen sowie Gemischen aus zwei oder mehr Einzelindividuen.

Die Organoaluminium-Katalysatorkomponente (2) betreffend ist zu sagen, daß sich hierfür die einschlägig üblichen Verbindungen eignen; als geeignete Individien sind z.B. zu nennen solche der Formeln $Al(C_2H_5)_3$, $Al(i-C_4H_9)_3$, $Al(n-C_4H_9)_3$, $Al(C_8H_{17})_3$ sowie Isoprenylaluminium.

Abschließend ist noch zu bemerken, daß die erfindungsgemäßen Übergangsmetall-Katalysatorkomponenten (1), d.h. die Produkte (VI) empfindlich gegen hydrolytische sowie oxidative Einflüsse sind. Insoweit sollte man beim Umgang mit diesen Substanzen also die für Ziegler-Katalysatoren einschlägig üblichen Vorsichtsmaßnahmen treffen (z.B. Feuchtigkeitsausschluß, Inertgasatmosphäre).

**Beispiel 1**

Herstellung der Übergangsmetall-Katalysatorkomponente (1):
Stufe (1.1)
Es wurde ausgegangen von (1.1.1) 12,5 Gewichtsteilen Siliciumdioxid ($SiO_2$, Teilchendurchmesser 40 - 150 μm, Porenvolumen: 1,7 cm³/g, Oberfläche: 430 m²/g) sowie (1.1.2) einer Lösung aus 100 Gewichtsteilen Methanol und 10 Gewichtsteilen einer Übergangsmetall-Komposition, bestehend aus 100 Molteilen Vanadiumtrichlorid, 6 Molteilen eines Titantrihalogenids der Formel $TiCl_3 \cdot 1/3\ AlCl_3$ sowie 34 Molteilen Zirkontetrachlorid. Diese zwei Komponenten wurden vereinigt und die dabei erhaltene Suspension kurz gerührt. Anschließend wurde das gebildete festphasige Zwischenprodukt (IV) isoliert durch Abtreiben der flüchtigen Bestandteile in einem Rotationsverdampfer, der bis zu einem Betriebsdruck von 15 mbar und einer Betriebstemperatur von 55°C gebracht wurde.
Stufe (1.2)
10 Gewichtsteile des in Stufe (1.1) gewonnenen festphasigen Zwischenprodukts (IV) wurden in 50 Gewichtsteilen n-Heptan suspendiert, worauf diese Suspension mit einer Lösung aus 5 Gewichtsteilen Diethylaluminiumchlorid in 20 Gewichtsteilen n-Heptan versetzt und die daraus resultierende Suspension kurz bei 50°C gerührt wurde. Anschließend wurde filtriert, drei mal mit n-Heptan gewaschen und im Vakuum getrocknet. Die Analyse des erhaltenen festphasigen Produktes (VI) - d.h. der Katalysatorkomponente (1) - ergab einen Gehalt an Übergangsmetallen von 0,002 Mol/g.
Polymerisation:
10 Gewichtsteile der Übergangsmetall-Katalysatorkomponente (1) (entsprechend 1 Molteil Übergangsmetalle) wurden in 3000 Gewichtsteilen n-Heptan suspendiert. Die so erhaltene Suspension wurde in einen Rührautoklaven gegeben, der mit 70 000 Gewichtsteilen (entsprechend etwa 50 % seines Fassungsvermögens) n-Heptan und 120 Gewichtsteilen Triisobutylaluminium (2) (entsprechend 30 Molteilen) beschickt war. Sodann wurde unter Rühren und bei den - jeweils durch Regelung konstant gehaltenen - Parametern: Ethylendruck = 25 bar, Wasserstoffdruck = 4 bar, Temperatur = 95°C, über eine Zeitspanne von 1,5 Stunden polymerisiert, wonach die Polymerisation durch Entspannen des Autoklaven abgebrochen wurde.

Auf diese Weise wird mit zufriedenstellender Produktivität ein Polymerisat erhalten, das eine hohe Steifigkeit sowie eine gute Verarbeitbarkeit aufweist und sich durch eine ausgeprägte Spannungsrißbeständigkeit auszeichnet.

**Beispiel 2**

Herstellung der Übergangsmetall-Katalysatorkomponente (1):
Stufe (1.1)
Es wurde ausgegangen von (1.1.1) 12,5 Gewichtsteilen Siliciumdioxid ($SiO_2$, Teilchendurchmesser 40 - 150 μm, Porenvolumen: 1,7 cm³/g, Oberfläche: 430 m²/g sowie (1.1.2) einer Lösung aus 100 Gewichtsteilen Methanol und 10,5 Gewichtsteilen einer Übergangsmetall-Komposition, bestehend aus 100 Molteilen Vanadiumtrichlorid, 8 Molteilen eines Titantrihalogenids der Formel $TiCl_3 \cdot 1/3\ AlCl_3$ sowie 67 Molteilen Zirkontetrachlorid. Diese zwei Komponenten wurden vereinigt und die dabei erhaltene Suspension kurz gerührt. Anschließend wurde das gebildete festphasige Zwischenprodukt (IV) isoliert durch Abtreiben der flüchtigen Bestandteile in einem Rotationsverdampfer, der bis zu einem Betriebsdruck von 15 mbar und einer Betriebstemperatur von 55°C gebracht.

Stufe (1.2)

10 Gewichtsteile des in Stufe (1.1) gewonnen festphasigen Zwischenprodukts (IV) wurden in 50 Gewichtsteilen n-Heptan suspendiert, worauf diese Suspension mit einer Lösung aus 5 Gewichtsteilen Diethylaluminiumchlorid in 20 Gewichtsteilen n-Heptan versetzt und die daraus resultierende Suspension kurz bei 50°C gerührt wurde. Anschließend wurde filtriert, drei mal mit n-Heptan gewaschen und im Vakuum getrocknet. Die Analyse des erhaltenen festphasigen Produktes (VI) - d.h. der Katalysatorkomponente (1) - ergab einen Gehalt an Übergangsmetallen von 0,0017 Mol/g.

Polymerisation:

10 Gewichtsteile der Übergangsmetall-Katalysatorkomponente (1) (entsprechend 1 Molteil Übergangsmetalle) wurden in 3000 Gewichtsteilen n-Heptan suspendiert. Die so erhaltene Suspension wurde in einen Rührautoklaven gegeben, der mit 70 000 Gewichtsteilen (entsprechend etwa 50 % seines Fassungsvermögens) n-Heptan, 4000 Gewichtsteilen Hexen-1 und 120 Gewichtsteilen Triisobutylaluminium (2) (entsprechend 36 Molteilen) beschickt war. Sodann wurde uunter Rühren und bei den - jeweils durch Regelung konstant gehaltenen - Parametern: Ethylendruck = 27 bar, Wasserstoffdruck 2 bar, Temperatur = 95°C, über eine Zeitspanne von 1,5 Stunden polymerisiert, wonach die Polymerisation durch Entspannen des Autoklaven abgebrochen wurde.

Auch auf diese Weise wird mit zufriedenstellender Produktivität ein Polymerisat erhalten, das eine relativ hohe Steifigkeit sowie eine gute Verarbeitbarkeit aufweist und sich durch eine besonders ausgeprägte Spannungsrißbeständigkeit auszeichnet.

**Patentanspruch**

Verfahren zum Herstellen von Homo- und Copolymerisaten von $C_2$- bis $C_8$-α-Monoolefinen durch Polymerisation des bzw. der Monomeren bei Temperaturen von 30 bis 200°C und Drüken von 0,1 bis 200 bar mittels eines Ziegler-Katalysatorsystems aus

(1) einer Übergangsmetall-Katalysatorkomponente und

(2) einer Organoaluminium-Katalysatorkomponente der Formel

$AlR_mX_{3-m}$,

worin stehen

X für einen Rest OR, Chlor, Brom bzw. Wasserstoff,

R für einen $C_1$- bis $C_{18}$-Kohlenwasserstoffrest, und

m für eine Zahl von 1 bis 3,

mit den Maßgaben, (i) daß das Atomverhältnis Übergangsmetall aus der Katalysatorkomponente (1) : Aluminium aus der Katalysatorkomponente (2) im Bereich von 1 : 0,1 bis 1 : 500 liegt, sowie (ii) daß als Übergangsmetall-Katalysatorkomponente (1) eingesetzt wird das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1.000 μm, ein Porenvolumen von 0,3 bis 3 cm³/g sowie eine Oberfläche von 100 bis 1.000 m²/g besitzt und die Formel $SiO_2.aAl_2O_3$ - worin a steht für eine Zahl im Bereich von 0 bis 2 - hat, und

(1.1.2) eine Lösung (II), wie sie sich ergibt beim Zusammenbringen von

(IIa) 100 Gewichtsteilen eines Alkohols der Formel

Z-OH,

worin Z steht für eine gesättigten $C_1$- bis $C_8$-Kohlenwasserstoffrest, und

(IIb) 0,01 bis 40 Gewichtsteilen einer Übergangsmetall-Komposition

miteinander in Berührung bringt unter Bildung einer Suspension (III), mit der Maßgabe, daß das Gewichtsverhältnis anorganisch-oxidischer Stoff (I) : Übergangsmetall-Komposition (IIb) im Bereich von 1 : 0,01 bis 1 : 1,2 liegt, die Suspension (III) bei einer Temperatur, die unterhalb von 200°C und oberhalb des Schmelzpunkts des verwendeten Alkohols (IIa) liegt, bis zur trockenen Konsistenz - Bildung eines festphasigen Zwischenprodukts (IV) - eindampft, und

(1.2) dann

(1.2.1) das aus Stufe (1.1) erhaltene festphasige Zwischenprodukt (IV) und

(1.2.2) eine in einem organischem Lösungsmittel gelöste Aluminiumverbindung (V) der Formel

$AlR_mX_{3-m}$,

worin stehen

X für einen Rest OR, Chlor, Brom bzw. Wasserstoff,

R für einen $C_1$- bis $C_{18}$-Kohlenwasserstoffrest, und

m für eine Zahl von 1 bis 3,

miteinander in Berührung bringt unter Bildung einer Suspension, mit der Maßgabe, daß das Gewichtsverhältnis festphasiges Zwischenprodukt (IV) : Aluminiumverbindung (V) im Bereich von 1 : 0,05 bis 1 : 2 liegt, - wobei das als Suspendiertes resultierende festphasige Produkt (VI) die Übergangsmetall-Katalysatorkomponente (1) ist - ,

dadurch gekennzeichnet, daß als Übergangsmetall-Katalysator-Komponente (1) eingesetzt wird ein festphasiges Produkt (VI), das erhalten worden ist unter Verwendung einer Übergangsmetall-Komposition (IIb) aus

(IIb1) 100 Molteilen eines Vanadiumtrihalogenids, wobei das Halogen Chlor und/oder Brom sein kann,

(IIb2) 1 bis 100 Molteilen eines Titantrihalogenids, wobei das Halogen Chlor und/oder Brom sein kann, sowie

(IIb3) 20 bis 200 Molteilen eines Zirkontetrahalogenids, wobei das Halogen Chlor und/oder Brom sein kann.

**Claim**

A process for the preparation of homopolymers and copolymers of $C_2$-$C_8$ $\alpha$-monoolefins, by polymerization of the monomer or monomers at from 30 to 200°C, and under a pressure of from 0.1 to 200 bar, using a Ziegler catalyst system comprising

(1) a transition metal catalyst component, and

(2) an organoaluminum catalyst component of the formula

$AlR_mX_{3-m}$,

where

X is a radical OR, chlorine, bromine or hydrogen,

R is a $C_1$-$C_{18}$-hydrocarbon radical, and

m is a number from 1 to 3,

with the provisos (i) that the atomic ratio of the transition metal from catalyst component (1) to aluminum from catalyst component (2) is from 1 : 0.1 to 1 : 500, and (ii) that the transition metal catalyst component (1) used is a solid-phase product (VI), obtained by a method in which

(1.1) first

(1.1.1) a finely divided, porous, inorganic oxidic substance (I), which has a particle diameter of from 1 to 1,000 μm, a pore volume of from 0.3 to 3 cm³/g and a surface area of from 100 to 1,000 m²/g and is of the formula $SiO_2.aAl_2O_3$, where a is a number from 0 to 2, and

(1.1.2) a solution (II), as obtained on combining

(IIa) 100 parts by weight of an alcohol of the formula

Z-OH,

where Z is a saturated $C_1$-$C_8$-hydrocarbon radical, and

(IIb) from 0.01 to 40 parts by weight of a transition metal composition,

are brought into contact with one another to form a suspension (III), with the proviso that the weight ratio of inorganic oxidic substance (I) to transition metal composition (IIb) is from 1 : 0.01 to 1 : 1.2, the suspension (III) is evaporated to dryness at a temperature which is below 200°C and above the melting point of the alcohol (IIa) used, a solid-phase intermediate (IV) being formed, and

(1.2) thereafter

(1.2.1) the solid-phase intermediate (IV) obtained from stage (1.1), and

(1.2.2) a solution of an aluminum compound (V) of the formula

$AlR_mX_{3-m}$,

where

X is a radical OR, chlorine, bromine or hydrogen,

R is a $C_1$-$C_{18}$-hydrocarbon radical, and

m is a number from 1 to 3, in an organic solvent are brought into contact with one another to form a suspension, with the proviso that the weight ratio of the solid-phase intermediate (IV) to the aluminum compound (V) is from 1 : 0.05 to 1 : 2, and the resulting suspended solid-phase product (VI) is the transition metal catalyst component (1),

wherein the transition metal catalyst component (1) employed is a solid-phase product (VI) which has been obtained using a transition metal composition (IIb) comprising

(IIb1) 100 molar parts of a vanadium trihalide in which the halogen can be chlorine and/or bromine,

(IIb2) from 1 to 100 molar parts of a titanium trihalide in which the halogen can be chlorine and/or bromine, and

(IIb3) from 20 to 200 molar parts of a zirconium tetrahalide in which the halogen can be chlorine and/or bromine.

**Revendication**

Procedé de préparation d'homo- et copolymères d'$\alpha$-monooléfines en $C_2$ à $C_8$ par polymérisation du ou des monomères à des températures de 30 à 200°C et sous des pressions de 0,1 à 200 bars, au moyen d'un système catalyseur de Ziegler formé de:

(1) un composant de catalyseur constitué par un métal de transition et

(2) un composant de catalyseur constitué par un organoaluminique de formule

$AlR_mX_{3-m}$,

dans laquelle

X est mis pour un radical OR, un atome de chlore, de brome ou d'hydrogène,

R est mis pour un radical hydrocarboné en $C_1$ à $C_{18}$

m est mis pour un nombre de 1 à 3,

avec ces conditions : (i) que le rapport atomique du métal de transition du composant de catalyseur (1) à l'aluminium du composant (2) se situe dans la gamme de 1 : 0,1 à 1 : 500 et (ii) qu'il soit utilisé, en tant que composant de catalyseur constitué par un metal de transition (1), le produit en phase solide (VI) qui a été obtenu

(1.1) tout d'abord en mettant en contact l'une avec l'autre

(1.1.1) une matière de la nature d'un oxyde inorganique (I), poreuse et finement divisée, ayant un diamètre de particules de 1 à 1000 μm, un volume de pores de 0,3 à 3 cm³/g, ainsi qu'une surface de 100 à 1000 m²/g et répondant à la formule $SiO_2.aAl_2O_3$ -a étant un nombre dans la gamme de 0 à 2 - et

(1.1.2) une solution (II) formée en mélangeant

(IIa) 100 parties en poids d'un alcool de formule Z-OH,

' dans laquelle Z est mis pour un radical hydrocarbone en $C_1$ à $C_8$ saturé, et

(IIb) 0,01 à 40 parties en poids d'une composition d'un métal de transition,

pour former une suspension (III), avec cette condition que le rapport pondéral de la matière de la nature d'un oxyde inorganique (1) à la composition du métal de transition (IIb) se situe dans la gamme de 1 : 0,01 à 1 : 1,2, et en évaporant la suspension (III), à une température qui se situe au-dessous de 200° et au-dessus du point de fusion de l'alcool (IIa) utilisé, jusqu'à la consistance sèche - formation d'un produit intermédiaire en phase solide (IV) -,

(1.2) puis en mettant en contact l'un avec l'autre

(1.2.1) le produit intermédiaire en phase solide (IV) obtenu dans l'étape (1.1) et

(1.2.2) un composé d'aluminium (V) dissous dans un solvant organique et répondant à la formule

$AlR_mX_{3-m}$,

dans laquelle

X est mis pour un radical OR, un atome de chlore, de brome ou d'hydrogène,

R est mis pour un radical hydrocarboné en $C_1$ à $C_{18}$, et

m est mis pour un nombre de 1 à 3,

pour former une suspension, avec cette condition que le rapport pondéral du produit intermédiaire en phase solide (IV) au composé d'aluminium (V) se situe dans la gamme de 1 : 0,05 à 1 : 2 - le produit en phase solide (VI) que l'on obtient ainsi en suspension étant le composant de catalyseur constitué par un métal de transition (1)

caractérisé en ce qu'on utilise, comme composant de catalyseur constitué par un métal de transition (1), un produit en phase solide (VI) qui a été obtenu en utilisant une composition de métaux de transition (IIb) formée de

(IIb1) 100 parties molaires d'un trihalogénure de vanadium, l'halogène pouvant être le chlore et/ou le brome, de préférence un trichlorure de vanadium,

(IIb2) 1 à 100 parties molaires d'un trihalogénure de titane, l'halogène pouvant être le chlore et/ou le brome, de préférence un trichlorure de titane et

(IIb3) 20 à 200 parties molaires d'un tétrahalogénure de zirconium, l'halogène pouvant être le chlore et/ou le brome, de préférence un tétrachlorure de zirconium.